# EUROPEAN PATENT SPECIFICATION

(11) **EP 0 827 128 B1**
(45) Date of publication and mention of the grant of the patent: **24.05.2000**
(21) Application number: 96202382.6
(22) Date of filing: 28.08.1996
(51) Int. Cl.: G09F 7/16, B44C 1/16, B60R 13/10

(54) **Apparatus and process for applying individual pre-spaced three dimensional indicia to a receiving surface**
Vorrichtung und Verfahren zum Aufbringen von individuellen dreidimensionalen Zeichen auf eine Oberfläche
Dispositif et procédé pour appliquer des signes individuels, tridimensionnels sur une surface

(43) Date of publication of application: 04.03.1998
(73) Proprietor: MINNESOTA MINING AND MANUFACTURING COMPANY, St. Paul, Minnesota 55133-3427 (US)
(72) Inventor: Skingley, John L., RG20 8LY Berkshire (GB)
(74) Representative: Voortmans, Gilbert J.L.

(56) References cited:
- EP-A- 0 636 519
- WO-A-94/18014
- FR-A- 2 719 691
- US-A- 4 295 275

## Description

This invention relates to a method of applying a set of three-dimensioned indicia to a receiving surface, a carrier for use in that method and a method for making such carrier.

Where a set of indicia, in particular letters, numbers, punctuations etc..., are to applied on a receiving surface to leave a name or designation thereon it is desired that the individual indicia are correctly spaced and positioned to each other.

In case the indicia are two dimensional it is possible to arrange them on a backing sheet with a pre-spacing tape on top of the indicia. To apply the indicia to a surface, the backing sheet is removed and whilst the indicia remain attached to the pre-spacing tape they are pressed against the surface. The pre-spacing tape is then removed once the indicia have been applied to the receiving surface. Such method is generally only practical for indicia having a thickness of less than 1 mm.

However, US-5.226.993 describes a method wherein also indicia of more than a millimeter, i.e. three dimensioned indicia, are applied to a surface using a pre-spacing tape. In this method the indicia may possibly move during transportation and handling. Furthermore, it is difficult to correctly and consistently apply them on a receiving surface.

Three dimensional indicia are generally connected through a connecting web. Although such web can be designed not to disturb the appearance of the designation too much, the method imposes design limitations and is not especially satisfactory. GB 2250369 provides an alternative method comprising the steps of providing a jig having recesses corresponding to each indicium, with the recesses being positioned relative to each other in accordance with the desired relative positions of the indicia on the receiving surface, positioning the indicia in the recesses so that the back faces of the indicia are exposed, applying adhesive to the back faces of the indicia, locating the jig against the surface and applying pressure to the recesses and thus to the front faces of the indicia to cause the indicia to adhere to the surface, and removing the jig.

This latter method however has the disadvantage that it is difficult to achieve conformity of application. Further, as the indicia are cupped in the jig, on application the individual indicia do not release consistently from the jig. Moreover, this method is expensive since each desired designation requires its own corresponding jig which is produced from a plastic material in a thermoforming process making use of a former in the shape of a correctly spaced set of indicia. Because of the rather thin nature of the plastic material, such jig needs to be replaced after a few uses.

Accordingly, it is an object of the present invention to provide an improved method for applying three dimensioned indicia to a receiving surface wherein one or more of the disadvantages in the prior art are overcome. According to the present invention there is provided a carrier 5 for applying individually three dimensioned indicia to a receiving surface, said carrier comprising a dimensionally stable frame 10 defining a cut-out 15 being covered at one side with an adhesive tape 30 and said three dimensioned indicia 22,23 being positioned in a desired relative position to each other in said cut-out 15 and adhered with their front to said adhesive tape 30 and said three dimensioned indicia 22,23 having an adhesive coating on their back-side covered with a liner 20.

According to the present invention there is also provided a method of applying three dimensioned indicia 22,23 to a receiving surface comprising the steps of:
- providing a carrier 5 comprising a dimensionally stable frame 10 defining a cut-out 15 being covered at one side with an adhesive tape 30 and said three dimensioned indicia 22,23 being positioned in a desired relative position to each other in said cut-out 15 and adhered with their front to said adhesive tape 30 and said three dimensioned indicia 22,23 having an adhesive coating on their back-side covered with a liner 20;
- removing said liner 20 from the back of said three dimensioned indicia;
- offering said carrier 5 to said receiving surface with the back of said three dimensioned indicia 22,23 facing the receiving surface;
- applying pressure to said carrier 5 to adhere said three dimensioned indicia 22,23 to said receiving surface;
- removing said dimensionally stable frame 10 and adhesive tape 30, leaving said three dimensioned indicia on said receiving surface in a desired position relative to each other.

Also, the present invention provides a method for producing a carrier 5 for applying individually three dimensioned indicia 22,23 to a receiving surface comprising the steps of:
- providing a base jig 40 having one or more reference features 41;
- providing a liner 20 having adhesive pads 51 corresponding to each three dimensioned indicium 22,23, said adhesive pads 51 being arranged in a desired relative position to each other and said liner 20 having one or more reference features 52;
- arranging said liner 20 on said base jig 40 by matching said one or more reference features 52 of said liner to one or more reference features 41 of said base jig 40;
- providing a pre-spacing jig 60 having means 63 for aligning said three dimensioned indicia in said desired relative position to each other and said pre-spacing jig 60 having one or more reference features 61;
- arranging said pre-spacing jig 60 on said base jig 40 by matching said one or more reference features 61 of said pre-spacing jig to one or more reference features 41 of said base jig 40;
- aligning said three dimensioned indicia 22,23 using said aligning means 63 and pressing each indicium to its corresponding adhesive pad 51;
- removing said pre-spacing jig 60;
- providing a dimensionally stable frame 10 defining a cut-out 15 and having one or more reference features 71;
- arranging said dimensionally stable frame 10 on said base jig 40 by matching said one or more reference features 71 of said dimensionally stable frame to one or more reference features 41 of said base jig so as to fit said three dimensioned indicia 22,23 in said cut-out 15 defined by said dimensionally stable frame 10;
- arranging an adhesive tape 30 over said cut-out 15 of said dimensionally stable frame 10 thereby adhering said three dimensioned indicia 22,23 to said adhesive tape 30;
- removing said base jig 40.

The present invention will be illustrated hereinafter with reference to the following drawings without the intention to limit the invention thereto:

Figure 1 is a schematic drawing of a carrier 5 in accordance with the present invention.

Figure 2 is a schematic drawing of a base jig 40 that can be used in making a carrier in accordance with this invention.

Figure 3 is a schematic drawing of a set of liners 20 provided with adhesive pads corresponding to three-dimensioned indicia.

Figure 4 is a schematic drawing of a pre-spacing jig 60.

Figure 5 is a schematic drawing of frame 10.

Figure 6 is a cross-section of carrier 5 along line 6 as shown in figure 1.

The carrier and method of the present invention allow for application of a set of individual three dimensioned indicia representing a name or designation to be applied to a receiving surface such as for example a wall, a door or a machine and in particular for application of a name and type on a car. The present invention offers the advantage of being less expensive and easy. Moreover, the method of this invention allows for application of the three dimensioned indicia in a consistent manner.

With the term "three dimensioned indicia" in connection with this invention are meant letters, numbers, punctuations, pictures etc... that have a thickness of at least a millimeter. With the term "kiss-cutting" is meant die-cutting of a sheet material to a controlled depth so that a certain upper layer(s), e.g. a layer of adhesive, are penetrated to leave a desired cut pattern in that layer(s).

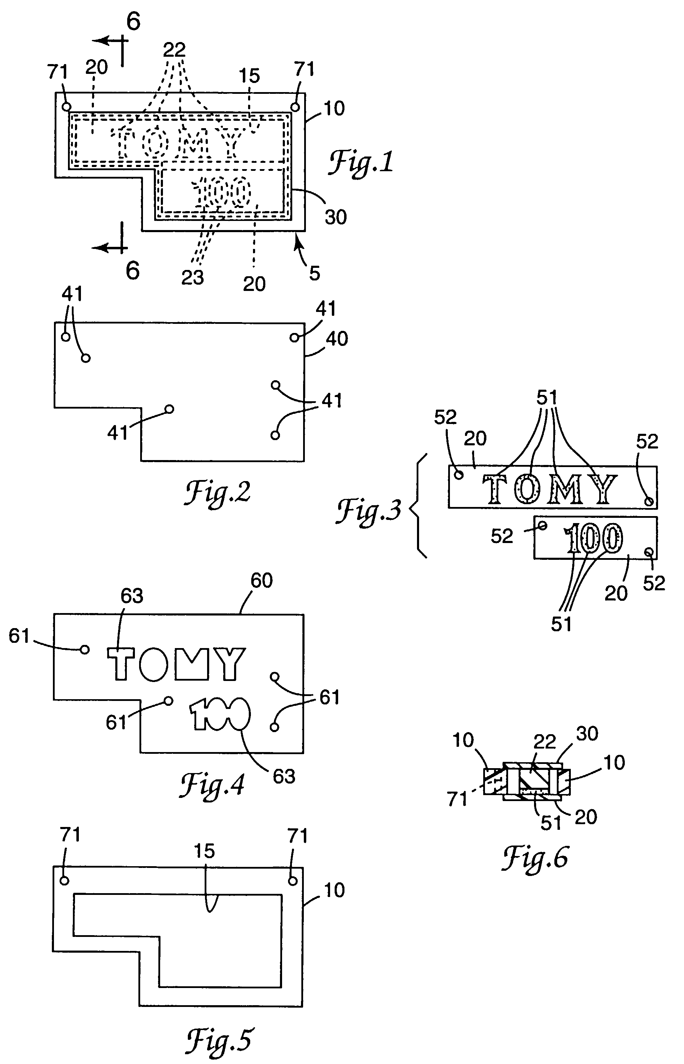

Referring to figures 1 and 6, carrier 5 comprises a dimensionally stable frame 10 defining a cut-out 15. Suitable materials that can be used as a dimensionally stable frame 10 are for example a metal frame, thick cardboard, a rigid plastic material etc... Particularly preferred is a corrugated or fluted plastic material that offers the advantage of being rigid, dimensionally stable and cost effective. Furthermore, a frame 10 of corrugated plastic material can be reused several times thereby further reducing cost. Preferably, the thickness of frame 10 is equal to or slightly less thick than that of the indicia. In case frame 10 is to thin, mis-alignment of the indicia may occur during manufacture of carrier 5 and/or movement of indicia 22,23 may occur during transportation and handling.

In cut-out 15 there are arranged three dimensioned indicia 22,23 with adhesive 51 on their back. The three dimensioned indicia 22,23 are held in a desired position relative to each other by adhesive tape 30 covering cut-out 15. The adhesive 51 provided on the back side of the three dimensioned indicia 22,23 is preferably such that a firm fixation of the three dimensioned indicia 22,23 on the receiving surface can be achieved. Suitable adhesives for fixing indicia to a receiving surface, in particular a car surface, can be found in "Handbook of Pressure Sensitive Adhesive Technology", second edition, edited by Donatas Satas pages 700-705. The front face of the three dimensioned indicia 22,23 is adhered to an adhesive tape 30 covering cut-out 15. Suitable adhesives of adhesive tape 30 are such that they are capable of keeping three-dimensioned indicia 22,23 in place under normal handling conditions of the carrier while on the other hand easy releasing the three dimensioned indicia once they are fixed to a receiving surface and adhesive tape 30 is being removed. Examples of suitable adhesives may be found in "Handbook of Pressure Sensitive Adhesive Technology", second edition, edited by Donatas Satas.

In accordance with a preferred embodiment of the present invention, carrier 5 is shaped in such a way that one or more of its outer edges can be used to assist in correctly and consistently locating carrier 5, and accordingly the three-dimensioned indicia 22,23, on a receiving surface. Locating carrier 5 to a receiving surface thereby becomes substantially easier and can be done quickly.

A carrier in accordance with the present invention can be used for applying three dimensioned indicia in a desired position relative to each other on a receiving surface. To apply three dimensioned indicia using carrier 5, liners 20 are removed from the back of the three dimensioned indicia 22,23. Subsequently, the carrier is offered to a receiving surface with the back of the indicia towards the receiving surface. An appropriate pressure is then applied, for example by means of a roller, to carrier 5 such that the three dimensioned indicia 22,23 are firmly fixed to the receiving surface. Adhesive tape 30 and dimensionally stable frame 10 are then removed leaving three dimensioned indicia 22,23 in a desired relative position to each other on the receiving surface. Adhesive tape 30 can be first peeled of and subsequently frame 10 can be removed. Preferably they are removed together. The method of applying three dimensioned indicia according to the present invention thus allows for quick and consistent application of three dimensioned indicia to a receiving surface.

It will further be appreciated that frame 10 can be reused for fixing another set of three dimensioned indicia to a receiving surface. Moreover, the present invention offers the advantage that such further set of three dimensioned indicia may be different from a previous one. This is particularly advantageous when applying designations to a car that may consist of the car name and a type. Referring to figure 1 for example indicia 22 could be the cars name and indicia 23 the type. Accordingly different types of cars with the same name can be provided with an appropriate designation using the same frame for each car type whereby only indicia 23 need to be changed from type to type.

A carrier in accordance with the present invention may be produced as follows. A base jig 40 as shown in figure 2 is provided having reference features 41. These reference features are preferably locators pins although other reference features such as markings or holes can be used as well. For sake of simplifying further description, it will be assumed that reference features 41 are locator pins. On this base jig 40 are then arranged liners 20 that are provided with kiss cutted adhesive pads 51 correponding to each indicium (see figure 3). The adhesive pads 51 are arranged on the liner in a desired relative position to each other. Arrangement of liners 20 on base jig 40 is accomplished by matching reference features 52 on liners 20 to corresponding reference features 41 on base jig 40. Preferably reference features 52 are holes into which a locator pin fits.

A pre-spacing jig as shown in figure 4 is then arranged on base jig 40 and on top of liners 20. Pre-spacing jig 60 is preferably a rigid material such as for example a rigid plastic sheet. Pre-spacing jig 60 has cut-outs 63 corresponding to each indicium and these cut-outs 63 are arranged in a desired relative position to each other. Arrangement of pre-spacing jig 60 is carried out by matching reference features 61 of the pre-spacing jig with corresponding reference features 41 of base jig 40. Reference features 61 are preferably holes into which a locator pin fits.

The indicia are then inserted each in its corresponding cut-out 63 and pressed against the adhesive pads 51. Once the indicia are firmly adhered to their corresponding adhesive pads, the pre-spacing jig 60 is removed and a dimensionally stable frame 10 (figure 5) defining a cut-out 15 is arranged on base jig 40 by matching reference features 71, preferably holes, with corresponding reference features 41. Arrangement of frame 10 is such that the indicia fit in cut-out 15. An adhesive tape is then applied over cut-out 15 adhering the front of the three dimensioned indicia to the adhesive tape so that they are held in place in cut-out 15. Base jig 40 can then be removed and a carrier in accordance with this invention is obtained.

## Claims

1. A carrier (5) for applying individually three dimensioned indicia to a receiving surface, said carrier comprising a dimensionally stable frame (10) defining a cut-out (15) being covered at one side with an adhesive tape (30) and said three dimensioned indicia (22,23) being positioned in a desired relative position to each other in said cut-out (15) and adhered with their front to said adhesive tape (30) and said three dimensioned indicia (22,23) having an adhesive coating on their back-side covered with a liner (20).

2. A carrier (5) according to claim 1 being shaped such that one or more of its outer edges can assist in locating said carrier to said receiving surface.

3. A carrier (5) according to claim 1 wherein said frame (10) has a thickness equal to or slightly less than that of said three dimensioned indicia (22,23).

4. Method of applying three dimensioned indicia (22,23) to a receiving surface comprising the steps of:
- providing a carrier (5) comprising a dimensionally stable frame (10) defining a cut-out (15) being covered at one side with an adhesive tape (30) and said three dimensioned indicia (22,23) being positioned in a desired relative position to each other in said cut-out (15) and adhered with their front to said adhesive tape (30) and said three dimensioned indicia (22,23) having an adhesive coating on their back-side covered with a liner (20);
- removing said liner (20) from the back of said three dimensioned indicia;
- offering said carrier (5) to said receiving surface with the back of said three dimensioned indicia (22,23) facing the receiving surface;
- applying pressure to said carrier (5) to adhere said three dimensioned indicia (22,23) to said receiving surface;
- removing said dimensionally stable frame (10) and adhesive tape (30), leaving said three dimensioned indicia on said receiving surface in a desired position relative to each other.

5. A method according to claim 4 wherein one or more of the outer edges of the shape of said carrier (5) are used to assist in locating said carrier to said receiving surface.

6. A method according to claim 5 wherein said frame (10) has a thickness equal to or slightly less than that of said three dimensioned indicia (22,23).

7. Method for producing a carrier (5) for applying individually three dimensioned indicia (22,23) to a receiving surface comprising the steps of:
- providing a base jig (40) having one or more reference features (41);
- providing a liner (20) having adhesive pads (51) corresponding to each three dimensioned indicium (22,23), said adhesive pads (51) being arranged in a desired relative position to each other and said liner (20) having one or more reference features (52);
- arranging said liner (20) on said base jig (40) by matching said one or more reference features (52) of said liner to one or more reference features (41) of said base jig (40);
- providing a pre-spacing jig (60) having means (63) for aligning said three dimensioned indicia in said desired relative position to each other and said pre-spacing jig (60) having one or more reference features (61);
- arranging said pre-spacing jig (60) on said base jig (40) by matching said one or more reference features (61) of said pre-spacing jig to one or more reference features (41) of said base jig (40);
- aligning said three dimensioned indicia (22,23) using said aligning means (63) and pressing each indicium to its corresponding adhesive pad (51);
- removing said pre-spacing jig (60);
- providing a dimensionally stable frame (10) defining a cut-out (15) and having one or more reference features (71);
- arranging said dimensionally stable frame (10) on said base jig (40) by matching said one or more reference features (71) of said dimensionally stable frame to one or more reference features (41) of said base jig so as to fit said three dimensioned indicia (22,23) in said cut-out (15) defined by said dimensionally stable frame (10);
- arranging an adhesive tape (30) over said cut-out (15) of said dimensionally stable frame (10) thereby adhering said three dimensioned indicia (22,23) to said adhesive tape (30);
- removing said base jig (40).

8. A method according to claim 7 wherein said aligning means (63) are cut-outs corresponding to a three dimensioned indicium (22,23).

9. A method according to claim 7 wherein said adhesive pads (51) are kiss cutted on said liners (20).

## Patentansprüche

1. Träger (5) zum Aufbringen von einzelnen, dreidimensionalen Zeichen auf eine Aufnahmefläche, wobei der Träger einen formstabilen Rahmen (10) umfaßt, der einen Ausschnitt (15) definiert, welcher auf einer Seite mit einem Klebeband (30) bedeckt ist, und wobei die dreidimensionalen Zeichen (22, 23) in einer gewünschten Position bezüglich einander in dem Ausschnitt (15) positioniert sind und mit ihrer Vorderseite an dem Klebeband (30) haften und die dreidimensionalen Zeichen (22, 23) auf ihrer Rückseite eine Klebstoffbeschichtung aufweisen, die mit einem Abdeckband (20) bedeckt ist.

2. Träger (5) nach Anspruch 1, der so geformt ist, daß einer oder mehrere seiner Außenränder die Anordnung des Trägers bezüglich der Aufnahmefläche unterstützen können.

3. Träger (5) nach Anspruch 1, bei dem der Rahmen (10) eine Dicke aufweist, die gleich der der dreidimensionalen Zeichen (22, 23) oder etwas kleiner als diese ist.

4. Verfahren zum Aufbringen dreidimensionaler Zeichen (22, 23) auf einen Aufnahmefläche, mit den folgenden Schritten:
- Bereitstellen eines Trägers (5) mit einem formstabilen Rahmen (10), der einen Ausschnitt (15) definiert, welcher auf einer Seite mit einem Klebeband (30) bedeckt wird, und wobei die dreidimensionalen Zeichen (22, 23) in einer gewünschten Position bezüglich einander in dem Ausschnitt (15) positioniert und mit ihrer Vorderseite an dem Klebeband (30) haften und die dreidimensionalen Zeichen (22, 23) auf ihrer Rückseite eine Klebstoffbeschichtung aufweisen, die mit einem Abdeckband (20) bedeckt ist;
- Entfernen des Abdeckbands (20) von der Rückseite der dreidimensionalen Zeichen;
- Zuführen des Trägers (5) zu der Aufnahmefläche, wobei die Rückseite der dreidimensionalen Zeichen (22, 23) zu der Aufnahmefläche weist;
- Ausüben von Druck auf den Träger (5) zum Kleben der dreidimensionalen Zeichen (22, 23) an die Aufnahmefläche;
- Entfernen des formstabilen Rahmens (10) und des Klebebands (30), wobei die dreidimensionalen Zeichen auf der Aufnahmefläche in einer gewünschten Position bezüglich einander verbleiben.

5. Verfahren nach Anspruch 4, bei dem ein oder mehrere der Außenränder der Form des Trägers (5) dazu verwendet werden, das Positionieren des Trägers bezüglich der Aufnahmefläche zu unterstützen.

6. Verfahren nach Anspruch 5, bei dem der Rahmen (10) eine Dicke aufweist, die gleich der der dreidimensionalen Zeichen (22, 23) oder etwas kleiner als diese ist.

7. Verfahren zur Herstellung eines Trägers (5) zum Aufbringen von einzelnen dreidimensionalen Zeichen (22, 23) auf eine Aufnahmefläche, mit den folgenden Schritten:
- Bereitstellen einer Basisspannvorrichtung (40) mit einem oder mehreren Referenzmerkmalen (41);
- Bereitstellen eines Abdeckbands (20) mit Klebstoffunterlagen (51), die jedem dreidimensionalen Zeichen (22, 23) entsprechen, wobei die Klebstoffunterlagen (51) in einer gewünschten Position bezüglich einander angeordnet sind und das Abdeckband (20) ein oder mehrere Referenzmerkmale (52) aufweist;
- Anordnen des Abdeckbands (20) auf der Basisspannvorrichtung (40) durch Anpassen des einen oder der mehreren Referenzmerkmale (52) des Abdeckbands an eines oder mehrere der Referenzmerkmale (41) der Basisspannvorrichtung (40);
- Bereitstellen einer Vorbeabstandungsspannvorrichtung (60) mit Mitteln (63) zum Ausrichten der dreidimensionalen Zeichen in der gewünschten Position bezüglich einander, wobei die Vorbeabstandungsspannvorrichtung (60) ein oder mehrere Bezugsmerkmale (61) aufweist;
- Anordnen der Vorbeabstandungsspannvorrichtung (60) auf der Basisspannvorrichtung (40) durch Anpassen des einen oder der mehreren Referenzmerkmale (61) der Vorbeabstandungsspannvorrichtung an eines oder mehrere Referenzmerkmale (41) der Basisspannvorrichtung (40);
- Ausrichten der dreidimensionalen Zeichen (22, 23) unter Verwendung der Ausrichtungsmittel (63) und Drücken jedes Zeichens an seine entsprechende Klebstoffunterlage (51);
- Entfernen der Vorbeabstandungsspannvorrichtung (60);
- Bereitstellen eines formstabilen Rahmens (10), der einen Ausschnitt (15) definiert und ein oder mehrere Referenzmerkmale (71) aufweist;
- Anordnen des formstabilen Rahmens (10) auf der Basisspannvorrichtung (40) durch Anpassen des einen oder der mehreren Referenzmerkmale (71) des formstabilen Rahmens an eines oder mehrere der Referenzmerkmale (41) der Basisspannvorrichtung, so daß die dreidimensionalen Zeichen (22, 23) in den durch den formstabilen Rahmen (10) definierten Ausschnitt (15) passen;
- Anordnen eines Klebebands (30) über dem Ausschnitt (15) des formstabilen Rahmens (10), wodurch die dreidimensionalen Zeichen (22, 23) an das Klebeband (30) geklebt werden;
- Entfernen der Basisspannvorrichtung (40).

8. Verfahren nach Anspruch 7, bei dem die Ausrichtungsmittel (63) Ausschnitte sind, die einem dreidimensionalen Zeichen (22, 23) entsprechen.

9. Verfahren nach Anspruch 7, bei dem die Klebstoffunterlagen (51) auf den Abdeckbändern (20) teileingeschnitten sind (kiss cut).

## Revendications

1. Support (5) pour appliquer séparément des signes tridimensionnels sur une surface réceptrice, ledit support comprenant un cadre (10) de dimension stable définissant une découpe (15) recouverte d'un côté d'un ruban adhésif (30) et lesdits signes tridimensionnels (22, 23) étant placés dans une position relative souhaitée les uns par rapport aux autres dans ladite découpe (15) et étant collés par leur face avant sur ledit ruban adhésif (30) et lesdits signes tridimensionnels (22, 23) ayant un revêtement adhésif sur leur face arrière, recouvert d'une doublure (20).

2. Support (5) selon la revendication 1, ayant une forme telle que l'un ou plusieurs de ses bords externes peuvent aider à positionner ledit support sur ladite surface réceptrice.

3. Support (5) selon la revendication 1, dans lequel ledit cadre (10) a une épaisseur égale à ou légèrement inférieure à celle desdits signes tridimensionnels (22, 23).

4. Procédé pour appliquer des signes tridimensionnels (22, 23) sur une surface réceptrice, comprenant les étapes consistant à :
- fournir un support (5) comprenant un cadre (10) de dimension stable définissant une découpe (15) recouverte d'un côté d'un ruban adhésif (30) et lesdits signes tridimensionnels (22, 23) étant placés dans une position relative souhaitée les uns par rapport aux autres dans ladite découpe (15) et étant collés par leur face avant sur ledit ruban adhésif (30) et lesdits signes tridimensionnels (22, 23) ayant un revêtement adhésif sur leur face arrière, recouvert d'une doublure (20) ;
- enlever ladite doublure (20) de la face arrière desdits signes tridimensionnels ;
- offrir ledit support (5) à ladite surface réceptrice, la face arrière desdits signes tridimensionnels (22, 23) faisant face à la surface réceptrice ;
- appliquer de la pression sur ledit support (5) pour faire adhérer lesdits signes tridimensionnels (22, 23) à ladite surface réceptrice ;
- enlever ledit cadre (10) de dimension stable et le ruban adhésif (30), en laissant lesdits signes tridimensionnels sur ladite surface réceptrice dans une position souhaitée les uns par rapport aux autres.

5. Procédé selon la revendication 4, dans lequel un ou plusieurs des bords externes de la forme dudit support (5) sont utilisés pour aider à positionner ledit support sur ladite surface réceptrice.

6. Procédé selon la revendication 5, dans lequel ledit cadre (10) a une épaisseur égale à ou légèrement inférieure à celle desdits signes tridimensionnels (22, 23).

7. Procédé de production d'un support (5) pour appliquer séparément des signes tridimensionnels (22, 23) sur une surface réceptrice, comprenant les étapes consistant à :
- fournir un gabarit de base (40) ayant une ou plusieurs caractéristiques de référence (41) ;
- fournir une doublure (20) ayant des pastilles adhésives (51) correspondant à chaque signe tridimensionnel (22, 23), lesdites pastilles adhésives (51) étant arrangées dans une position relative souhaitée les unes par rapport aux autres et ladite doublure (20) ayant une ou plusieurs caractéristiques de référence (52) ;
- arranger ladite doublure (20) sur ledit gabarit de base (40) en faisant correspondre lesdites une ou plusieurs caractéristiques de référence (52) de ladite doublure avec une ou plusieurs caractéristiques de référence (41) dudit gabarit de base (40) ;
- fournir un gabarit de pré-espacement (60) ayant un moyen (63) pour aligner lesdits signes tridimensionnels dans ladite position relative souhaitée les uns par rapport aux autres et ledit gabarit de pré-espacement (60) ayant une ou plusieurs caractéristiques de référence (61) ;
- arranger ledit gabarit de pré-espacement (60) sur ledit gabarit de base (40) en faisant correspondre lesdites une ou plusieurs caractéristiques de référence (61) dudit gabarit de pré-espacement avec une ou plusieurs caractéristiques de référence (41) dudit gabarit de base (40) ;
- aligner lesdits signes tridimensionnels (22, 23) à l'aide dudit moyen d'alignement (63) et presser chaque signe sur sa pastille adhésive correspondante (51) ;
- enlever ledit gabarit de pré-espacement (60) ;
- fournir un cadre (10) de dimension stable définissant une découpe (15) et ayant une ou plusieurs caractéristiques de référence (71) ;
- arranger ledit cadre (10) de dimension stable sur ledit gabarit de base (40) en faisant correspondre lesdites une ou plusieurs caractéristiques de référence (71) dudit cadre de dimension stable avec une ou plusieurs caractéristiques de référence (41) dudit gabarit de base de manière à ajuster lesdits signes tridimensionnels (22, 23) dans ladite découpe (15) définie par ledit cadre (10) de dimension stable ;
- arranger un ruban adhésif (30) par-dessus ladite découpe (15) dudit cadre (10) de dimension stable pour ainsi faire adhérer lesdits signes tridimensionnels (22, 23) sur ledit ruban adhésif (30) ;
- enlever ledit gabarit de base (40).

8. Procédé selon la revendication 7, dans lequel ledit moyen d'alignement (63) est constitué par des découpes correspondant à un signe tridimensionnel (22, 23).

9. Procédé selon la revendication 7, dans lequel lesdites pastilles adhésives (51) sont couchées par léchage sur lesdites doublures (20).
